# EUROPÄISCHE PATENTSCHRIFT

(11) **EP 1 946 735 B1**
(45) Veröffentlichungstag und Bekanntmachung des Hinweises auf die Patenterteilung: **30.04.2014**
(21) Anmeldenummer: 08000907.9
(22) Anmeldetag: 18.01.2008
(51) Int. Cl.: A61G 3/06, B60R 3/02, B61D 23/02

(54) **Zustiegs- und/oder Zufahrtshilfe für Fahrzeuge mit Personenbeförderung**
Access and/or entry assistance for vehicle for conveying persons
Assistance à l'entrée et/ou à l'accès pour véhicules de transport de personnes

(30) Priorität: 18.01.2007 DE 202007000913 U
(43) Veröffentlichungstag der Anmeldung: 23.07.2008
(73) Patentinhaber: Kircher, Werner, 34292 Ahnatal (DE)
(72) Erfinder: Kircher, Werner, 34292 Ahnatal (DE)
(74) Vertreter: Bauer Vorberg Kayser Patentanwälte

(56) Entgegenhaltungen:
- FR-A- 2 887 504
- GB-A- 2 405 852
- US-A1- 2006 245 883

## Beschreibung

Die Erfindung betrifft eine Zustiegs- und/oder Zufahrtshilfe entsprechend dem Oberbegriff des Anspruchs 1.

Zustiegs- und Zufahrtshilfen dieser Art sind in vielfältiger Form bekannt. Sie finden Anwendung bei Fahrzeugen zur Personenbeförderung, beispielsweise bei Bussen und Schienenfahrzeugen des öffentlichen Nahverkehrs, und erleichtern den Ein- und Ausstieg bei Fahrzeugen dadurch, dass im Bereich von Haltestellen eine am jeweiligen Fahrzeug verschiebbar und ggf. auch verschwenkbar gelagerte Trittplatte in Form einer Rampe, eines linearen Tritts od. dgl. ausgefahren wird. Die Bezeichnung Zustiegs- und Zufahrtshilfe beinhaltet selbstverständlich auch deren Verwendung als Ausstiegs- und Ausfahrtshilfe.

Die beispielsweise aus Aluminium bestehende und mit einer rutschhemmenden Auflage versehene Trittplatte kann in einem hinteren Bereich mit Laufrädern versehen sein. Alternativ kann die Trittplatte auch aus einem vom angeordneten Trittbrett und einem gelenkig mit dessen Hinterende gekoppelten, Laufräder aufweisenden Rollwagen bestehen. Die Laufräder sind in den Seitenteilen eines unterhalb des Fahrzeugbodens montierten Rahmens hin- und herfahrbar gelagert sind. Diese Konstruktion dient dem Zweck, die Trittplatte vorzugsweise vor dem Öffnen einer Fahrzeugtür zwischen einem Stand- und Wartebereich für zu befördernde Personen, beispielsweise einem Bahnsteig, und einer Bodenfläche im Einstiegsbereich des Fahrzeugs zu positionieren, um eventuell zwischen diesen beiden Bereichen bestehende Niveauunterschiede und/oder Spalte auszugleichen oder einfacher passierbar zu machen. Dadurch wird es beispielsweise auch Rollstuhlfahrern und Kinderwagenbenutzern ermöglicht, einfacher ein- bzw. auszusteigen. Nach Beendigung der Aus- und Einstiegsphase und evtl. nach dem Schließen der Fahrzeugtüren wird die Trittplatte wieder in die Ausgangsposition zurückgebracht.

Bei einer bekannten Zustiegs- und/oder Zufahrtshilfe (DE 103 51 988 Al) sind nicht nur Laufschienen für die Laufräder, sondern auch die zum Hin- und Herfahren der Trittplatte benötigten Antriebsmittel in dem unterhalb oder innerhalb des Fahrzeugbodens befestigten Rahmen untergebracht. Zu den Antriebsmitteln gehören ein in einem rückwärtige Bereich des Rahmens angeordneter Motor und ein mit diesem und der Trittplatte bzw. dem Rollwagen verbundener, in einem mittleren Bereich des Rahmens angeordneter Kurbeltrieb. Dadurch ergibt sich zwar der Vorteil, dass die Trittplatte zusammen mit den zugehörigen Funktions- und Antriebsteilen und dem Rahmen als komplette Baueinheit am Fahrzeugboden montiert werden kann. Störend wirken jedoch der verhältnismäßig komplizieite und daher mit hohen Herstellungskosten verbundene Aufbau der Antriebsmittel und der Umstand, daß es bei Anwendung leistungsstarker Antriebe schwierig ist, die in der Regel für die Baueinheit geforderte geringe Bauhöhe einhalten.

In einer nicht worveröffentlicliten Anmeldung desselben Anmelders ist vorgeschlagen worden, anstelle des Kurbeltriebs eine Gewindespindel oder einen Zahnriemen vorzusehen (DE 10 2005 055 684). Auch derartige Antriebsmittel sind jedoch mit hohen Herstellungskosten verbunden bzw. bei geringen Bauhöhen nur dann anwendbar, wenn die Trittplatte auf ihrer Unterseite mit Ausnehmungen zur zumindest teilweisen Aufnahme der Zahnriemen od. dgl. versehen wird. Das wäre jedoch mit einer mechanischen Schwächung der Trittplatte verbunden und würde zusätzliche

Maßnahmen zur Erfüllung der üblichen, an derartige Trittplatten gestellten statischen Anforderungen erforderlich machen.

Schließlich sind Zustiegs- und/oder Zufahrtshilfen der eingangs bezeichneten Gattung bekannt (FR-A-2 887 504), deren Trittplatten in einem mittleren Teil ein auf Rollen geführtes Trittbrett und eine gelenkig mit diesem verbundene, in den Seitenteilen geführte Traverse aufweisen. Die Seitenteile sind an ihren Vorder- und Hinterenden durch Querstreben verbunden und bilden mit je einer an ihnen befestigten, oberen und unteren Abdeckplatte ein abgeschlossenes Schutzgehäuse.

Die der Erfindung zugrunde liegende Aufgabe besteht daher darin, die Zustiegs- und/oder Zufahrtshilfe der eingangs genannten Gattung derart auszubilden, dass sie trotz Anwendung eines leistungsstarken Antriebs mit geringer Bauhöhe und kostengünstig hergestellt werden kann.

Zur Lösung dieser Aufgabe dienen die kennzeichnenden Merkmale des Anspruchs 1.

Die Erfindung bringt den Vorteil mit sich, dass die Antriebseinheit außer dem Motor nur preisgünstige Riemen- oder Kettentriebe erfordert. Da außerdem die mit der Trittplatte gekoppelten Antriebselemente auf den Außenseiten der Führungsschienen für die Trittplatten liegen, ist eine Reduzierung der Dicke und damit eine mechanische Schwächung der Trittplatte nicht erforderlich. Das gilt selbst dann, wenn die Durchmesser der Antriebsrollen für die Antriebselemente nur wenig kleiner gewählt werden, als der Bauhöhe der gesamten Baueinheit entspricht. Außerdem ergibt sich der Vorteil, dass die U-förmigen, die riemen- oder kettenförmigen Antriebselemente aufnehmenden Seitenteile leicht nach innen abgedichtet werden können, um diese Antriebselemente in je einem im wesentlichen geschlossenen Gehäuse anzuordnen und daher ohne wesentlichen Mehraufwand und auf einfache Weise vor Verunreinigungen zu schützen.

Weitere vorteilhafte Merkmale der Erfindung ergeben sich aus den Unteransprüchen.

Die Erfindung wird nachfolgend in Verbindung mit den beiliegenden Zeichnungen an Ausführungsbeispielen näher erläutert. Es zeigen:
Fig. 1 eine schematische perspektivische Ansicht einer erfindungsgemäßen Zustiegs- und/oder Zufahrtshilfe mit einem Rahmen, einer an diesem ein- und ausfahrbar gelagerten Trittplatte und mit der Trittplatte gekoppelten Antriebselementen;
Fig. 2 eine schematische, perspektivische Ansicht einer in dem Rahmen der Zustiegs- und/oder Zufahrtshilfe nach Fig. 1 verschiebbar geführten, auf ihrer Rückseite als Rollwagen ausgebildeten Trittplatte;
Fig. 3 eine schematische und perspektive, teilweise aufgebrochene Teilansicht der Zustiegs- und/oder Zufahrtshilfe nach Fig. 1;
Fig. 4 einen schematischen, stark vergrößerten Querschnitt durch ein Seitenteil eines Rahmens der Zustiegs- und/oder Zufahrtshilfe etwa längs der Linie IV - IV der Fig. 3; und
Fig. 5 eine schematische Seitenansicht von innen her auf drei Laufräder des Rollwagens nach Fig. 2 und ein Seitenteil des Rahmens der Zustiegs- und/oder Zufahrtshilfe nach Fig. 1.

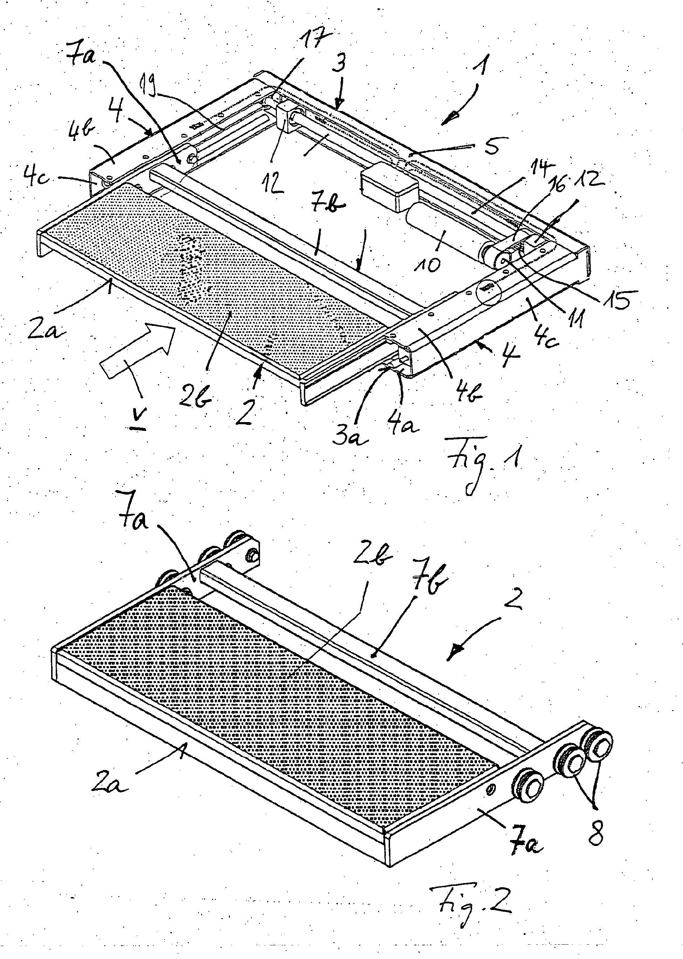

Fig. 1 zeigt eine Zustiegs- und/oder Zufahrtshilfe 1 mit einer Trittplatte 2, die z. B. an einem Autobus od. dgl. ausgebildet ist. Die Zustiegs- und/oder Zufahrtshilfe 1 nach Fig. 1 weist einen rechteckförmigen Rahmen 3 mit zwei parallelen Seitenteilen 4 auf, die an hinteren Enden durch ein Endprofil 5 und vorzugsweise in einem davon beabstandeten, z. B. mittleren Teil durch wenigstens eine zusätzliche Stütze verbunden sind. Die Seitenteile 4 sind vorzugsweise als nach innen offene, U-förmige Führungen ausgebildet, in denen ein aus zwei Seitenwangen 7a und einer Querstrebe 7b zusammengesetzter Rollwagen 7 (Fig. 2) der Trittplatte 2 vorzugsweise mittels Laufrädern 8 verschiebbar geführt ist, die an den Seitenwangen 7a drehbar gelagert sind. Dadurch kann die Trittplatte 2 parallel zu den Seitenteilen 4 vor- und zurückgeschoben und, bezogen auf das nicht gezeigte Fahrzeug, entweder über ein Vorderende 3a des Rahmens 3 hinaus in eine ausgefahrene, aus Fig. 1 ersichtliche Position vorgeschoben oder in Richtung eines Pfeils v in eine eingefahrene Position zurückgezogen werden, in welcher eine Vorderkante 2a der Trittplatte 2 im wesentlichen bündig mit dem Vorderende 3a des Rahmens 3 abschließt. Der Rollwagen 7a, 7b bildet, wie Fig. 2 zeigt, ein Untergestell der Trittplatte 2, auf dessen vorderem Abschnitt ein an sich beliebiges Trittbrett 2b montiert ist, das z. B. aus einem Gitterrost, einem Blech mit einer rutschfesten, z. B. aus Gummi hergestellten Auflage od. dgl. versehen sein kann. Außerdem kann ein vorderer Teil der Trittplatte 2 in an sich bekannter Weise schwenkbar anstatt starr mit dem Rollwagen 7a, 7b gekoppelt sein, um im ausgefahrenen Zustand eine leicht nach unten geneigte, zu einem Stand- oder Wartebereich führende Rampe zu bilden, sofern der Stand- oder Wartebereich nicht niveaugleich mit dem Rahmen 3 angeordnet ist.

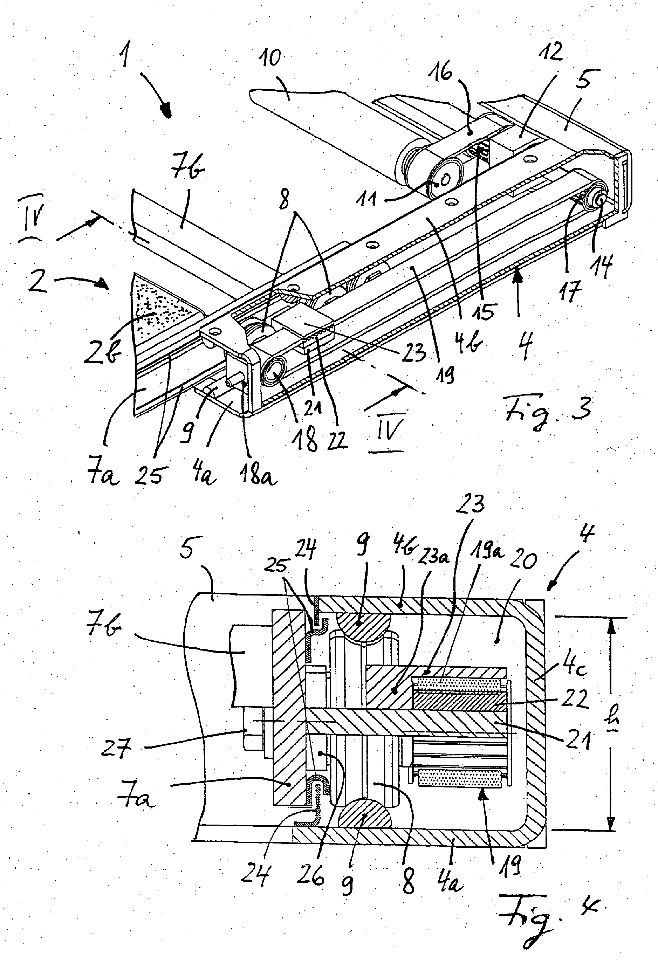

Wie insbesondere Fig. 3 und 4 zeigen, sind die Seitenteile 4 durch je ein Bodenteil 4a, ein Deckenteil 4b und eine diese verbindende Außenwand 4c gebildet, wodurch sie einen im wesentlichen U-förmigen (oder auch I-förmigen) Querschnitt erhalten. In Fig. 3 ist die Außenwand 4c weggelassen, um einen Blick in das Innere des Seitenteils 4 zu ermöglichen. Zweckmäßig sind sowohl an den Bodenteilen 4a als auch an den Deckenteilen 4b einander zugewandte, hier als Laufschienen ausgebildete Führungsschienen 9 befestigt, in denen die Laufräder 8 der Trittplatte 2 laufen.

Gemäß Fig. 1 ist in einem hinteren Bereich des Rahmens 3 ein Antriebsmotor 10 vorgesehen, der eine parallel zu den Achsen der Laufräder 8 angeordnete Abtriebswelle aufweist, auf der eine Rolle 11 befestigt ist. Ferner ist mittels Lagerböcken 12, die z. B. an dem Endprofil 5 befestigt sind, eine über die ganze Länge des Endprofils 5 erstreckte, parallel zur Abtriebswelle des Antriebsmotors 10 angeordnete und mit diesem in Wirkverbindung stehende Welle 14 drehbar gelagert, auf der eine auf die Rolle 11 ausgerichtete Rolle 15 befestigt ist. Die beiden Rollen 11, 15 dienen zur Aufnahme eines vorzugsweise endlosen Antriebselements 16. Der Antriebsmotor 10 ist vorzugsweise ein Reversiermotor, mittels dessen die Welle 14 wahlweise in der einen oder anderen Richtung gedreht werden kann.

An den beiden Enden der Welle 14 ist nach Fig. 1 und 3 je eine Antriebsrolle 17 befestigt. Diese Antriebsrollen 17 wirken mit je einer zugeordneten Umlenkrolle 18 zusammen, die in mittleren Bereichen der Seitenteile 4 und in den von den Boden- und Deckenteilen 4a, 4b begrenzten Räumen drehbar gelagert sind. Ihre Lagerung erfolgt mit Hilfe von Drehlagern 18a (Fig. 3), die an den Seitenteilen 4 befestigt sind. Außerdem sind die Umlenkrollen 18 so angeordnet, dass sie auf die Antriebsrollen 17 ausgerichtet sind und mit diesen fluchten. Über die Antriebsrollen 17 und die Umlenkrollen 18 läuft je ein weiteres, vorzugsweise endloses Antriebselement 19. Im übrigen ist klar, dass die Drehachsen der Antriebs- und Umlenkrollen 17 und 18, der Welle 14 und der Rollen 11, 15 zweckmäßig genau parallel zu den Drehachsen der Laufräder 8 angeordnet sind.

Die einander zugeordneten Rollen 11, 15 sowie die Antriebsrollen 17 und die Umlenkrollen 18 sind als Kettenräder oder Riemenscheiben und die über sie geführten Antriebselemente 16, 19 entsprechend als Ketten oder Riemen ausgebildet. Mit besonderem Vorteil werden für die Antriebselemente 16, 19 jeweils Zahnriemen verwendet, die auf ihren Innenseiten gezahnt sind, während die zugehörigen Rollen als Zahnriemenscheiben ausgebildet sind. Außerdem sind zweckmäßig nicht dargestellte Spannmittel zum Spannen der Antriebselemente 16, 19 vorgesehen.

Wie insbesondere Fig. 4 zeigt, sind die Antriebselemente 19 einschließlich der zugehörigen Antriebs- und Umlenkrollen jeweils in einem Raum 20 der Seitenteile 4 geführt und angeordnet, der auf den Außenseiten durch die Boden- und Deckenteile 4a, 4b sowie die Außenwände 4c und auf der Innenseite durch die Führungsschienen 9 begrenzt ist, zwischen denen die Laufräder 8 abrollen. Daher liegen die Antriebselemente 19 nicht nur auf den Außenseiten der Laufräder 8, sondern auch insgesamt außerhalb der Trittplatte 2 bzw. des Rollwagens 7a und 7b. Dies ist gemäß Fig. 2 und 4 eine Folge davon, dass die Laufräder 8 seitlich von der Trittplatte 2 abstehen und daher quer zur Laufrichtung der Trittplatte 2 deren äußere Begrenzungen bilden.

Damit die Trittplatte 2 je nach Drehrichtung der Welle 14 aus dem Rahmen 3 ausgefahren (Fig. 1) oder in den Rahmen 3 zurückgezogen werden kann, ist sie auf beiden Seiten mittels je eines in Fig. 3 und 4 schematisch dargestellten, an der betreffenden Seitenwange 7a befestigten, stabförmigen Mitnehmerelements 21 antriebsmäßig mit dem Antriebselement 19 verbunden. Zu diesem Zweck ist das Mitnehmerelement 21 im Ausführungsbeispiel mit einem dem Antriebselement 19 zugeordneten Ende an einem oberen Trum 19a des Antriebselements 19 befestigt. Diese Befestigung erfolgt z. B. durch Klemmung zwischen einer vorzugsweise gezahnten Befestigungsplatte 22, die an einer Unterseite des Trums 19a anliegt, und einer Klemmplatte 23, die einer Oberseite des Trums 19a anliegt und mittels eines seitlich an ihr befestigten Kupplungsstücks 23a sowie mittels nicht dargestellter Befestigungsschrauben am Mitnehmerelement 21 befestigt ist. Das Trum 19a des Antriebselements 19 wird auf diese Weise rutschfest zwischen der Befestigungsplatte 22 und der Klemmplatte 23 eingespannt, so dass es die Trittplatte 2 bei einer durch die Antriebsrolle 17 bewirkten Bewegung in der einen oder anderen Richtung sicher mitnimmt. Das der Trittplatte 2 zugeordnete Ende des Mitnehmerelements 21 ist für diesen Zweck z. B. mit Schrauben an der Seitenwange 7a des Rollwagens befestigt. Gemäß Fig. 3 kann es dabei beispielsweise einen zwischen zwei Laufrädern 8 freigelassenen Raum durchragen.

Die beschriebene Ausbildung und Anordnung des Antriebs für die Trittplatte 2 bringt den Vorteil mit sich, dass einerseits die Dicke der Trittplatte 2 und andererseits die Durchmesser der Antriebsrollen 17 im wesentlichen über die gesamte Höhe h (Fig. 4) der Innenseiten des Rahmenprofils bzw. der Seitenteile 4 erstreckt werden können. Dadurch sind weder Aussparungen in der Trittplatte 2 mit der Folge einer mechanischen Schwächung notwendig, um dadurch Raum für die Antriebselemente 19 zu schaffen, noch müssen die Durchmesser der Antriebsrollen 17 ungewünscht klein ausgebildet werden, um den Antrieb insgesamt zugunsten der Trittplattendicke klein zu halten. Sowohl die Trittplatte 2 als auch für die Antriebselemente 17, 18, 19 kann daher praktisch die gesamte zur Verfügung stehende Höhe h des Rahmens 3 genutzt werden.

Ein weiterer wesentlicher Vorteil des beschriebenen Antriebs besteht darin, dass der Raum 20, in dem die Antriebselemente 17, 18, 19 angeordnet sind, praktisch rundum abgeschlossen ist. Das kann noch dadurch verbessert werden, dass die Innenseiten der Seitenteile 4, die den Außenwänden 4c gegenüber liegen, mit zusätzlichen Dichtungen 24 und 25 abgedichtet werden, die als Labyrinth-Dichtungen ausgebildet sind. Die Dichtungen 24 sind z. B. an den Innenseiten der Boden- und Deckenteile 4a, 4b angeordnet, während die Dichtungen 25 an den Seitenwangen 7a der Trittplatte 2 befestigt sind. Eine tiefer reichende Erstreckung der Dichtungen 24 und 25 ist durch Achsen 26 der Laufräder 8 begrenzt. Da diese Achsen 26 die Drehlager (z. B. Kugellager) für die Laufräder 8 aufnehmen, haben sie bevorzugt vergleichsweise große Durchmesser. Sie liegen außerdem an den Außenseiten der Seitenwangen 7a an und sind von innen her mittels Schrauben 27 oder sonstwie an diesen befestigt. Der Umstand, dass sich dadurch zwischen den Dichtlippen 24 ein vergleichsweise großer Spalt bildet, wenn die Trittplatte 2 nach außen ausgefahren wird, stellt dabei keinen Nachteil dar, da dies nur bei im Stillstand befindlichem Fahrzeug erfolgt und die Trittplatte 2 vor dessen Weiterfahrt wieder voll eingefahren wird. Die Seitenteile 4 bilden daher gleichzeitig ausgezeichnete Schutzgehäuse für die Antriebselemente 18, 19 einschließlich der Laufräder 8 und damit ohne weitere Hilfsmaßnahmen einen wirksamen Schutz dieser Teile vor Verunreinigung oder Beschädigungen beim Betrieb.

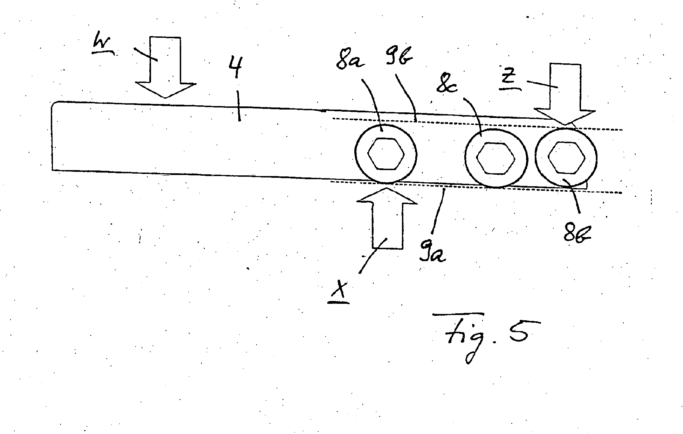

Ein weiteres bevorzugtes Ausführungsbeispiel der Erfindung enthält nach Fig. 5 eine besondere Anordnung der Laufräder 8. In Fig. 5 sind drei Paare von Laufrädern 8a, 8b und 8c dargestellt, die in den einander gegenüberliegenden Seitenteilen 4 des Rahmens 3 geführt sind. Dabei geben punktiert dargestellte Linien 9a, 9b die Lagen der unteren bzw. oberen Laufschienen 9 (Fig. 4) an einem der beiden beteiligten Seitenteile 4 an. Damit die Laufräder 8 zwischen diesen Laufschienen 9a, 9b leichtgängig abrollen können und nicht verklemmen, sind sie um ein Maß beabstandet, das etwas größer als der Durchmesser der Laufräder 8a, 8b und 8c ist. Außerdem ist das in Ausfahrrichtung der Trittplatte 2 erste Laufradpaar 8a auf den unteren Laufschienen 9a so abgestützt, dass es zu den oberen Laufschienen 9b etwas Luft hat. Dagegen ist das hintere Laufradpaar 8b an den oberen Laufschienen 9b so abgestützt, daß es zu den unteren Laufschienen 9a etwas Luft hat. Dadurch wird erreicht, daß bei Ausübung einer Kraft in Richtung eines Pfeils w, wie dies im ausgefahrenen Zustand der Fall sein wird, kein Kippmoment auf die Trittplatte 2 ausgeübt wird. Im eingefahrenen Zustand könnten sich jedoch aufgrund üblicher Vibrationen od. dgl. Kippmomente ergeben, die das Radpaar 8a nach oben und das Radpaar 8b nach unten drücken (Pfeile x und z), was unerwünschte Klappergeräusche verursachen könnte. Erfindungsgemäß ist daher wenigstens ein drittes, mittleres Laufradpaar 8c vorgesehen, das vorzugsweise höhenverstellbar ist und so angeordnet wird, das es ebenfalls auf den unteren (oder oberen) Laufschienen 9a (bzw. 9b) abgestützt ist. Ist dieses Laufradpaar 8c z. B. nahe dem hinteren Laufradpaar 8b angeordnet (Fig. 5), dann ist die Trittplatte 2 sowohl im ausgefahrenen wie auch im eingefahrenen Zustand fest auf den Laufradpaaren 8a bis 8c abgestützt, so dass Kippbewegungen weitgehend verhindert werden.

Ist es erwünscht oder erforderlich, auch die Antriebsteile 10 bis 16 vor Verunreinigungen oder Beschädigungen zu schützen, kann an den Unterseiten der Seitenteile 4 und des Endprofils 5 und ggf. der Stützstreben(n) ein den Rahmen 3 nach unten hin abdeckender, nicht dargestellter Boden befestigt sein, der den Innenraum des Rahmens 3 und die darin befindlichen Teile schützt. Dieser Boden weist vorzugsweise eine schwenkbare, ebenfalls nicht dargestellte Serviceklappe auf, die nach unten schwenkbar ist und trotz der Abdeckung bei Bedarf einen einfachen Zugang insbesondere zu den im hinteren Bereich des Rahmens 3 liegenden Antriebsteilen 10 bis 16 ermöglicht, was für Servicezwecke (Reinigung, Reparatur, Wartung usw.) vorteilhaft ist und eine umständliche Demontage des ganzen Rahmens 3 od. dgl. unnötig macht. Alternativ kann vorgesehen sein, den Boden nur bis zu einer hinteren Stützstrebe zu erstrecken und die Serviceklappe mittels eines Scharnierbandes od. dgl. schwenkbar an dieser Stützstrebe zu befestigen.

Die Erfindung ist nicht auf die beschriebenen Ausführungsbeispiele beschränkt, die auf vielfache Weise abgewandelt werden können. Bei Rahmen 3 kleiner Baugrößen kann es ausreichend sein, eine zusätzliche Stützstrebe nur am Vorderende 3a des Rahmens 3 anstatt auch oder nur in einem mittleren Teil vorzusehen, gegebenenfalls die Serviceklappe entfallen zu lassen und statt dessen z. B. einen leicht demontierbaren Boden an der Unterseite des Rahmens 3 vorzusehen. Weiter ist die Erfindung nicht auf die beschriebene Ausbildung der Antriebseinheit beschränkt. Möglich wäre es ferner, die Trittplatte 2 auf eine andere als die beschriebene Weise verschiebbar in den Seitenteilen 4 zu lagern. Weiterhin kann es zur Erzielung einer leichtgängigen Verschiebbarkeit der Trittplatte 2 bzw. des Rollwagens 7 zweckmäßig sein, die Laufräder 8 anstatt wie üblich aus Stahl aus einem gummiartigen Material oder einem Kunststoff herzustellen oder mit einer Beschichtung aus Gummi oder Kunststoff zu versehen. Weiterhin ist klar, daß die Abtriebswelle des Antriebsmotors 10 (Fig. 1) auch die Ausgangswelle eines dem Motor 10 nachgeschalteten Getriebes sein könnte. Außerdem könnte das Antriebselement 19 aus einem Riemen od. dgl. hergestellt sein, der z. B. zwei durch die Teile 22, 23 miteinander verbundene Enden aufweist. Möglich wäre auch, sein unteres Trum ganz wegzulassen und die beiden Enden des Antriebselements 19 auf die Rollen 17, 18 aufzuwickeln bzw. von diesen abzuwickeln. Schließlich versteht sich, daß die verschiedenen Merkmale auch in anderen als den beschriebenen und dargestellten Kombinationen angewendet werden können.

## Patentansprüche

1. Zustiegs- und/oder Zufahrtshilfe für Fahrzeuge mit Personenbeförderung, enthaltend einen Rahmen (3) mit zwei parallelen, durch ein Endprofil (5) verbundenen Seitenteilen (4), die durch je ein Bodenteil (4a), ein Deckenteil (4b) und eine beide verbindende Außenwand (4c) gebildet sind, eine in den Seitenteilen (4) ein- und ausfahrbare gelagerte Trittplatte (2) und einen Antriebsmotor (10) aufweisende Antriebsmittel für die Trittplatte (2), wobei der Antriebsmotor (10) in einem hinteren Bereich des Rahmens (3) angeordnet ist und die Boden- und/oder Deckenteile (4a, 4b) Führungss hienen (9) für die Trittplatte (2) aufweisen, wobei die Antriebsmittel zwei als Kette oder Riemen ausgebildete, je einem der beiden Seitenteile (4) zugeordnete Antriebselemente (19) enthalten und dass diese Antriebselemente (19) zwischen den Führungsschienen (9) und den Außenwänden (4c) der zugeordneten Seitenteile (4) angeordnet, antriebsmäßig mit der Trittplatte (2) verbunden und über je eine Umlenkrolle (18) und eine mit dem Antriebsmotor (10) verbundene Antriebsrolle (17) geführt sind, **dadurch gekennzeichnet, dass** die Seitenteile (4) auf ihren von den Außenwänden (4c) abgewandten Innenseiten gegenüber einem von dem Rahmen (3) gebildeten Innenraum durch Labyrinth-Dichtungen (24, 25) abgedichtet sind.

2. Zustiegs- und/oder Zufahrtshilfe nach Anspruch 1, **dadurch gekennzeichnet, dass** die beiden Antriebsrollen (17) durch eine mit dem Antriebmotor (11) in Wirkverbindung stehende Welle (14) verbunden sind.

3. Zustiegs- und/oder Zufahrtshilfe nach Anspruch 2, **dadurch gekennzeichnet, dass** die Welle (14) und eine Abtriebswelle des Antriebsmotors (10) mit Rollen (11, 15) versehen sind, über die ein weiteres, als Kette oder Riemen ausgebildetes Antriebselement (16) geführt ist.

4. Zustiegs- und/oder Zufahrtshilfe nach einem der Ansprüche 1 bis 3, **dadurch gekennzeichnet, dass** die Antriebselemente (16, 19) aus auf ihren Innenseiten gezahnten Riemen bestehen und die Rollen (11, 15, bzw. 17, 18) mit Auβenverzahnungen versehen sind.

5. Zustiegs- und/oder Zufahrtshilfe nach einem der Ansprüche 1 bis 4, **dadurch gekennzeichnet, dass** die Führungsschienen (9) zur Führung von Laufrädern (8) der Trittplatte (2) eingerichtet sind und die Laufräder (8) und die Rollen (11, 15, 17, 18) um parallel zueinander angeordnete Achsen drehbar sind.

6. Zustiegs- und/oder Zufahrtshilfe nach Anspruch 5, **dadurch gekennzeichnet, dass** die antriebsmäßige Verbindung der Antriebselemente (19) und der Trittplatte (2) mit Hilfe von Mitnehmerelementen (21) erfolgt, die einen zwischen zwei Laufrädern (8) vorhandenen Raum durchragen.

7. Zustiegs- und/oder Zufahrtshilfe nach einem der Ansprüche 1 bis 6, **dadurch gekennzeichnet, dass** die Antriebselemente (16, 18, 19) endlos ausgebildet sind oder zwei zu einem endlosen Antriebselement verbundene Enden aufweisen.

8. Zustiegs- und/oder Zufahrtshilfe nach einem der Ansprüche 1 bis 7, **dadurch gekennzeichnet, dass** an der Unterseite des Rahmens (3) ein den Innenraum abdeckender Boden befestigt ist, der eine nach unten schwenkbare, zumindest über den Bereich der Antriebsmittel erstreckte Serviceklappe aufweist.

9. Zustiegs- und/oder Zufahrtshilfe nach einem der Ansprüche 5 bis 8, **dadurch gekennzeichnet, dass** die Trittplatte (2) wenigstens drei hintereinander angeordnete Paare von auf den Führungsschienen (9) abrollenden Laufrädern (8a, 8b, 8c) enthält, wobei ein in Ausfahrrichtung vorderes Paar (8a) an einer unteren Führungsschiene (9a), ein in Ausfahrrichtung hinteres Paar (8b) an einer oberen Führungsschiene (9b) und ein zum Ausgleich von Toleranzen und zur Vermeidung von Kippbewegungen bestimmtes mittleres Paar (8c) von Laufrädern an der unteren Führungsschiene (9a) anliegt.

10. Zustiegs- und/oder Zufahrtshilfe nach einem der Ansprüche 5 bis 9, **dadurch gekennzeichnet, dass** die Laufräder (8) mit einer Beschichtung aus Gummi oder Kunststoff versehen sind oder aus Gummi oder Kunststoff bestehen.

## Claims

1. Boarding and/or drive-on aid for vehicles with passenger transport, containing a frame (3) with two parallel side parts (4) which are connected by an end profile (5), which are formed through a floor part (4a) a sealing part (4b) and an outer wall (4c) connecting both each, a stepping board (2) which is retractably and extendably mounted in the side parts (4) and driving means for the stepping board (2) comprising a drive motor (10), wherein the drive motor (10) is arranged in a rear region of the frame (3) and the floor and/or sealing parts (4a, 4b) comprise guide rails (9) for the stepping board (2), wherein the drive means contain two drive elements (19) formed as chain or belt each assigned to one of the two side parts (4) and that these drive elements (19) are arranged between the guide rails (9) and the side parts (4) assigned to the outer walls (4c), are drive-respectively connected to the stepping board (2) and are guided via a deflection roller (18) each and a drive roller (17) connected to the drive motor (10), **characterized in that** the side parts (4) on their inner sides facing away from the outer walls (4c) are sealed by labyrinth seals (24, 25) against an inner space formed by the frame (3).

2. The boarding and/or drive-on aid according to claim 1, **characterized in that** the two drive rollers (17) are connected by a shaft (14) which is operationally connected to the drive motor (10).

3. The boarding and/or drive-on aid according to claim 2, **characterized in that** the shaft (14) and an output shaft of the drive motor (10) are provided with rollers (11, 15), via which a further drive element (16) formed as a chain or belt is routed.

4. The boarding and/or drive-on aid according to any one of the claims 1 to 3, **characterized in that** the drive elements (16, 19) consist of belts which are toothed on their insides and the rollers (11, 15 and 17, 18) respectively are provided with outside toothings.

5. The boarding and/or drive-on aid according to any one of the claims 1 to 4, **characterized in that** the guide rails (9) are equipped for guiding running wheels (8) of the stepping board (2) and the running wheels (8) and the rollers (11, 15, 17, 18) are rotatable about axles which are arranged parallel to one another.

6. The boarding and/or drive-on aid according to claim 5, **characterized in that** the drive-related connection of the drive element (19) and of the stepping board (2) takes place with the help of driver elements (21), which project through a space that is present between two running wheels (8).

7. The boarding and/or drive-on aid according to any one of the claims 1 to 6, **characterized in that** the drive elements (16, 18, 19) are formed endlessly, or comprise ends which are connected into an endless drive element.

8. The boarding and/or drive-on aid according to any one of the claims 1 to 7, **characterized in that** on the lower side of the frame (3) a floor covering the inner space is fastened which comprises a service flap which can be pivoted downwards and extends at least over the region of the drive means.

9. The boarding and/or drive-on aid according to any one of the claims 5 to 8, **characterized in that** the stepping board (2) contains at least three pairs of running wheels (8a, 8b, 8c) arranged one behind the other and rolling on the guide rails (9), wherein in extension direction a front pair (8a) contacts a lower guide rail (9a), an in extension direction rear pair (8b) contacts an upper guide rail (9b) and a middle pair (8c) of running wheels intended for offsetting tolerances and for avoiding tilting movements contacts the lower guide rail (9a).

10. The boarding and/or drive-on aid according to any one of the claims 5 to 9, **characterized in that** the running wheels (8) are provided with a coating of rubber or plastic or consist of rubber or plastic.

## Revendications

1. Système d'aide à l'accès et/ou à la montée pour véhicules de transport de personnes, comprenant un cadre (3) doté de deux pièces latérales (4) parallèles reliées par un profilé terminal (5), qui sont constituées chacune d'une pièce de fond (4a), d'une pièce de dessus (4b) et d'une paroi extérieure (4c) reliant ces deux pièces, un plateau d'accès (2) rétractable et extensible dans ou depuis les pièces latérales (4) et des moyens moteurs présentant un moteur d'entraînement (10) pour le plateau d'accès (2), le moteur d'entraînement (10) étant disposé dans une partie arrière du cadre (3) et les pièces de fond et/ou de dessus (4a, 4b) présentant des rails de guidage (9) pour le plateau d'accès (2), les moyens moteurs comportant deux éléments moteurs (19) réalisés sous forme de chaîne ou de courroie et associés chacun à une des deux pièces latérales (4), et ces éléments moteurs (19) étant disposés entre les rails de guidage (9) et les parois extérieures (4c) des pièces latérales associées (4), étant connectés au niveau moteur au plateau d'accès (2) et étant guidés chacun par un rouleau d'inversion (18) et un rouleau moteur (17) raccordé au moteur d'entraînement (10), **caractérisé en ce que** les pièces latérales (4), sur leurs faces intérieures détournées des parois extérieures (4c), sont isolées d'un espace intérieur constitué par le cadre (3) par des joints labyrinthes (24, 25).

2. Système d'aide à l'accès et/ou à la montée selon la revendication 1, **caractérisé en ce que** les deux rouleaux moteurs (17) sont raccordés par un arbre (14) en interaction avec le moteur d'entraînement (10).

3. Système d'aide à l'accès et/ou à la montée selon la revendication 2, **caractérisé en ce que** l'arbre (14) et un arbre mené du moteur d'entraînement (10) sont pourvus de rouleaux (11, 15) grâce auxquels un autre élément moteur (16) se présentant sous forme de chaîne ou courroie est guidé.

4. Système d'aide à l'accès et/ou à la montée selon une des revendications 1 à 3, **caractérisé en ce que** les éléments moteurs (16, 19) sont composés de courroies crantées sur leurs faces intérieures et que les rouleaux (11, 15 ou 17, 18) sont pourvus de dentures extérieures.

5. Système d'aide à l'accès et/ou à la montée selon une des revendications 1 à 4, **caractérisé en ce que** les rails de guidage (9) sont conçus pour guider des roues (8) du plateau d'accès (2) et que les roues (8) et les rouleaux (11, 15, 17, 18) peuvent tourner autour d'axes disposés parallèlement.

6. Système d'aide à l'accès et/ou à la montée selon la revendication 5, **caractérisé en ce que** la connexion motrice des éléments moteurs (19) et du plateau d'accès (2) se fait à l'aide d'éléments entraîneurs (21) qui traversent un espace disponible entre deux roues (8).

7. Système d'aide à l'accès et/ou à la montée selon une des revendications 1 à 6, **caractérisé en ce que** les éléments moteurs (16, 18, 19) ont une configuration continue ou présentent deux extrémités raccordées à un élément moteur continu.

8. Système d'aide à l'accès et/ou à la montée selon une des revendications 1 à 7, **caractérisé en ce que**, sur la face inférieure du cadre (3), est fixé un fond recouvrant l'espace intérieur et qui présente une trappe de service pivotable vers le bas et s'étendant au moins au-dessus de la zone des éléments moteurs.

9. Système d'aide à l'accès et/ou à la montée selon une des revendications 5 à 8, **caractérisé en ce que** le plateau d'accès (2) comporte au moins trois paires disposées successivement de roues (8a, 8b, 8c) roulant sur les rails de guidage (9), une paire (8a) située à l'avant dans le sens de sortie sur un rail de guidage inférieur (9a), une paire (8b) située à l'arrière dans le sens de sortie sur un rail de guidage supérieur (9b) et qu'une roue médiane (8c) destinée à corriger des tolérances et à éviter des mouvements de basculement des roues repose sur le rail de guidage inférieur (9a).

10. Système d'aide à l'accès et/ou à la montée selon une des revendications 5 à 9, **caractérisé en ce que** les roues (8) sont pourvues d'un revêtement en caoutchouc ou en matière plastique ou sont composées de caoutchouc ou de matière plastique.
